# EUROPÄISCHE PATENTSCHRIFT

(11) **EP 4 178 084 B1**
(45) Veröffentlichungstag und Bekanntmachung des Hinweises auf die Patenterteilung: **22.04.2026**
(21) Anmeldenummer: 22202177.6
(22) Anmeldetag: 18.10.2022
(51) Int. Cl.: H02K 3/18, H02K 3/52, H02K 1/14, H02K 1/24

(54) **ELEKTROMOTOR**
ELECTRIC MOTOR
MOTEUR ÉLECTRIQUE

(30) Priorität: 05.11.2021 DE 102021128840
(43) Veröffentlichungstag der Anmeldung: 10.05.2023
(73) Patentinhaber: ebm-papst Mulfingen GmbH & Co. KG, 74673 Mulfingen (DE)
(72) Erfinder: Schellmann, Lucas, 74238 Altkrautheim (DE); Münz, Martin, 74673 Hollenbach (DE)
(74) Vertreter: Staeger & Sperling Partnerschaftsgesellschaft mbB

(56) Entgegenhaltungen:
- DE-A1- 102013 111 015
- US-A1- 2012 313 628
- US-A1- 2017 070 115

## Beschreibung

Die Erfindung betrifft einen Elektromotor, dessen Stator und/oder dessen Rotor einander gegenüberliegende Aufnahmetaschen zur Aufnahme eines Drahtabschnitts eines Wickeldrahts aufweist.

Aus dem Stand der Technik und beispielsweise aus den Schriften US 2012/313628 A1, US 2017/070115 A1 und DE 10 2013 111 015 A1 sind verschiedene Elektromotoren und Aspekte solcher Elektromotoren bekannt, welche einen relevanten Stand der Technik bilden.

Die Rotoren und/oder Statoren der Elektromotoren weisen meist eine Vielzahl von Zähnen auf, wobei jeweils zwischen zwei unmittelbar zueinander benachbarten Zähnen ein Wickelraum ausgebildet ist, in welchen ein Wickeldraht um die Zähne gewickelt wird bzw. ist, sodass dadurch die Spulenwicklungen gebildet werden bzw. sind.

Dabei kann es jedoch vorkommen, dass die Spulenwicklungen bzw. die Wickeldrähte zu Beginn eines Wickelns noch verrutschen können, wodurch unter Umständen der in dem Wickelraum vorhandene Platz nicht optimal genutzt werden kann.

Der Erfindung liegt deshalb die Aufgabe zugrunde, die vorgenannten Nachteile zu überwinden und einen Elektromotor bereitzustellen, mit welchem der vorhandene Platz in den Wickelräumen seines Rotors und/oder Stators möglichst optimal ausgenutzt und ein möglichst hoher Nutfüllungsfaktor erreicht werden kann.

Diese Aufgabe wird durch die Merkmalskombination gemäß Patentanspruch 1 gelöst.

Erfindungsgemäß wird daher ein Elektromotor mit einem Rotor und einem Stator vorgeschlagen. Der Rotor und/oder der Stator weisen jeweils eine Vielzahl von Zähnen auf. Zwischen jeweils zwei unmittelbar zueinander benachbarten Zähnen der Vielzahl von Zähnen ist jeweils ein erster Wickelraum zur Aufnahme einer Vielzahl von aus einem Wickeldraht gewickelten Spulenwicklungen ausgebildet, sodass der Rotor bzw. der Stator jeweils eine Vielzahl von ersten Wickelräumen aufweist. Als bezüglich der Zähne unmittelbar benachbart wird verstanden, dass kein weiterer Zahn in Umfangsrichtung zwischen den Zähnen liegt. Der Wickeldraht, welcher auch als Spulendraht bezeichnet werden kann, soll im Wickelprozess, bei welchem der Wickel- bzw. Spulendraht um die Zähne gewickelt wird, in dem Wickelraum platzfinden und diesem möglichst optimal ausfüllen. Erfindungsgemäß ist daher vorgesehen, dass zwischen den zueinander benachbarten Zähnen zumindest eines ersten Wickelraums ein mit dem jeweiligen ersten Wickelraum verbundener zweiter Wickelraum als Wickelraumerweiterung des ersten Wickelraums zur Aufnahme zumindest eines Drahtabschnitts des Wickeldrahts ausgebildet ist. Bei dem Drahtabschnitt des Wickeldrahts, welcher in dem Wickelraum angeordnet wird, handelt es sich vorzugsweise um einen Drahtabschnitt am Beginn oder am Ende eines um einen Zahn gewickelten Drahtes. Der zweite Wickelraum weist in eine Umfangsrichtung um eine Rotationsachse des Rotors zwei einander gegenüberliegende Seitenwände auf, welche an einer in Radialrichtung zu dem ersten Wickelraum weisenden ersten Seite des zweiten Wickelraums mit einem ersten Abstand, an einer in Radialrichtung von dem ersten Wickelraum abgewandten zweiten Seite des zweiten Wickelraums mit einem zweiten Abstand und in einem Mittelabschnitt zwischen der ersten Seite und der zweiten Seite einem dritten Abstand in Umfangsrichtung zueinander beabstandet sind. Der zweite Abstand ist gleich oder größer dem ersten Abstand und der dritte Abstand größer dem zweiten Abstand, sodass im Mittelabschnitt der Seitenwände zwei in Umfangsrichtung einander gegenüberliegende Aufnahmetaschen zur jeweiligen Aufnahme des zumindest einen Drahtabschnitts des Wickeldrahts gebildet sind.

Zusammenfassend wird also ein Elektromotor mit einem Rotor und einem Stator vorgeschlagen, wobei der Rotor und/oder der Stator jeweils eine Vielzahl von ersten Wickelräumen zur Aufnahme einer Vielzahl von aus einem Wickeldraht gewickelten Spulenwicklungen aufweist. Weiter ist zumindest ein mit jeweils einem ersten Wickelraum verbundener zweiter Wickelraum als Wickelraumerweiterung des ersten Wickelraums zur Aufnahme zumindest eines Drahtabschnitts des Wickeldrahts vorgesehen, wobei im zumindest einen zweiten Wickelraum zwei in Umfangsrichtung einander gegenüberliegende Aufnahmetaschen zur jeweiligen und vorzugsweise fixierenden Aufnahme des zumindest einen Drahtabschnitts des Wickeldrahts gebildet sind.

Dadurch kann beispielsweise ein Drahtabschnitt eines Wickel- bzw. Spulendrahts in einer der Aufnahmetaschen fixiert und anschließend um einen Zahn sowie den ersten Wickelraum füllend gewickelt werden, wobei es durch die Fixierung in der Aufnahmetasche nicht zu einem Verrutschen des Drahtes kommen kann.

Dadurch können die Spulendrähte bzw. der Spulendraht platzsparend in dem ersten Wickelraum aufgenommen und der aus dem Spulendraht gebildete Lagenaufbau im ersten Wickelraum minimiert werden. Dadurch wird ein hoher Füllfaktor des ersten Wickelraums bzw. ein hoher Nutfüllungsfaktor erreicht und der elektrische Wirkungsgrad des Elektromotors erhöht.

Dadurch, dass der Spulen- bzw. Wickeldraht bereits beim Wickelprozess am Rotor und/oder am Stator fixiert ist und der Draht nicht mehr verrutschen kann, wird zudem ein prozesssicheres Wickeln erreicht.

Eine Weiterbildung des Elektromotors sieht vor, dass die Seitenwände an der ersten Seite jeweils einen ersten Abschnitt aufweisen und von dem jeweiligen ersten Abschnitt jeweils über eine zu der zweiten Seite verlaufende und zu der Radialrichtung schrägen Ebene in den jeweiligen Mittelabschnitt übergehen.

Ebenso können die Seitenwände an der zweiten Seite jeweils einen zweiten Abschnitt aufweisen und von dem jeweiligen zweiten Abschnitt jeweils über eine zu der ersten Seite verlaufende und zu der Radialrichtung schrägen Ebene in den jeweiligen Mittelabschnitt übergehen.

Bei einer darauf basierende Variante des Elektromotors bilden die zu der zweiten Seite verlaufende schräge Ebene und die zu der ersten Seite verlaufende schräge Ebene einer Seitenwand gemeinsam eine Zentrierung zur Zentrierung des jeweiligen zumindest einen Drahtabschnitts des Wickeldrahts in der jeweiligen Aufnahmetasche.

Weiter kann vorgesehen sein, dass die zu der zweiten Seite verlaufende schräge Ebene und die zu der ersten Seite verlaufende schräge Ebene einer Seitenwand an einem ersten Endabschnitt, an welchem die schrägen Ebenen in den Mittelabschnitt übergehen, einen vierten Abstand zueinander aufweisen. Der vierte Abstand ist dabei kleiner oder gleich einem Durchmesser eines kleinsten für den Rotor bzw. den Stator verwendbaren Wickeldrahts.

Zudem kann die zu der zweiten Seite verlaufende schräge Ebene und die zu der ersten Seite verlaufende schräge Ebene einer Seitenwand an einem jeweils dem ersten Endabschnitt gegenüberliegendem zweiten Endabschnitt einen fünften Abstand zueinander aufweisen, wobei der fünfte Abstand größer oder gleich einem Durchmesser eines größten für den Rotor bzw. den Stator verwendbaren Wickeldrahts ist, insbesondere genau gleich einem Durchmesser des größten für den Rotor bzw. Stator verwendbaren Wickeldrahts.

Vorteilhaft ist auch eine Weiterbildung, bei welcher die zu der zweiten Seite verlaufende schräge Ebene und die zu der ersten Seite verlaufende schräge Ebene einer jeweiligen Seitenwand in einem vorbestimmten Öffnungswinkel zueinander angeordnet sind, durch welchen mit dem Wickeldraht ein Formschluss erzeugbar und der Wickeldraht zwischen den schrägen Ebenen fixierbar ist.

Die Aufnahmetaschen sind vorzugsweise jeweils ausgebildet, zumindest einen Drahtabschnitt des Wickeldrahts insbesondere durch Formschluss gegen eine Verschiebung in Radialrichtung zu fixieren, sodass der Spulen- bzw. Wickeldraht insbesondere an einem Drahtanfang fixiert und dieser bei einem Wickeln des Drahtes um einen jeweiligen Zahn in der Aufnahmetasche gehalten wird.

Weiter können die Aufnahmetaschen abhängig von der Wickelrichtung asymmetrisch zueinander ausgebildet sein.

Auch die Position des zweiten Wickelraums kann abhängig von einer vorgesehenen Wickelrichtung variieren. Entsprechend sieht eine weitere vorteilhafte Variante des Elektromotors vor, dass eine durch den zweiten Wickelraum verlaufende Mittelachse versetzt zu einer durch den ersten Wickelraum verlaufenden Mittelachse ist, sodass der zweite Wickelraum asymmetrisch bzw. außermittig zu dem ersten Wickelraum angeordnet ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Ausschnitt eines Stators;
- Fig. 2: ein zweiter Wickelraum.

Die Figuren sind beispielhaft schematisch. Gleiche Bezugszeichen in den Figuren weisen auf gleiche funktionale und/oder strukturelle Merkmale hin.

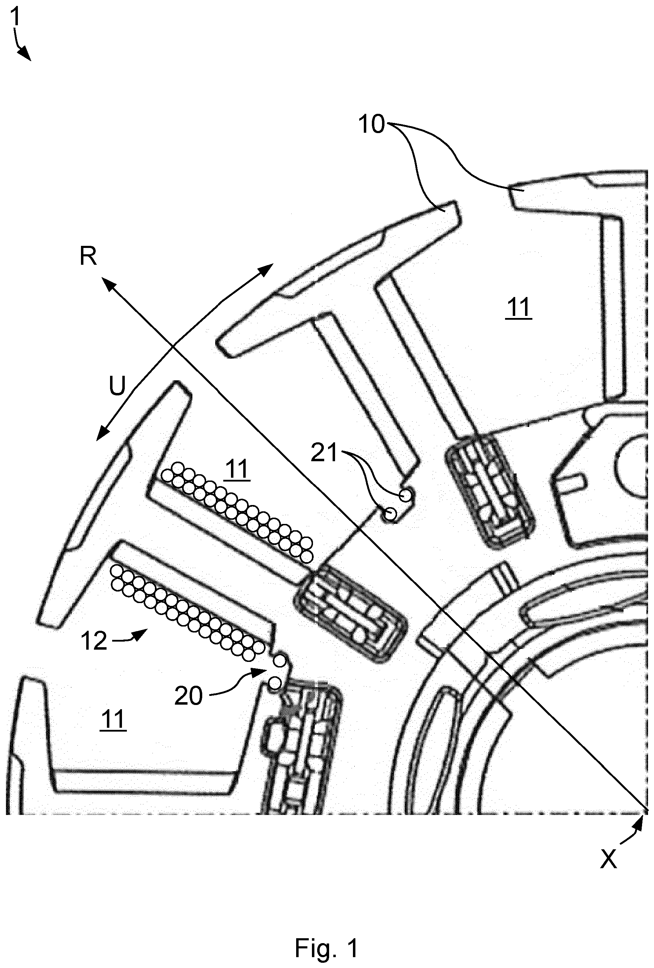

In Figur 1 ist beispielhaft ein Ausschnitt eines Elektromotors und genauer ein Viertel eines Stators 1 als Ausschnitt eines Elektromotors dargestellt, wobei das Viertel zwischen den Zähnen 10 drei erste Wickelräume 11 bzw. der gesamte Stator 1 insgesamt zwölf erste Wickelräume 11 zwischen seinen Zähnen 10 aufweist. In dem dargestellten Viertel bzw. bei dem gesamten Stator 1 sind zwischen jeweils zwei unmittelbar benachbarten Zähnen 11 genau zwei zweite Aufnahmeräume 20 ausgebildet.

Neben dem beispielhaft dargestellten Stator 1 sind auch andere Rotoren oder Statoren mit anderen Teilungsverhältnissen möglich. Beispielsweise können auch Rotoren und/oder Statoren mit 6, 9 oder mehr Zähnen und Wickelräumen vorgesehen sein.

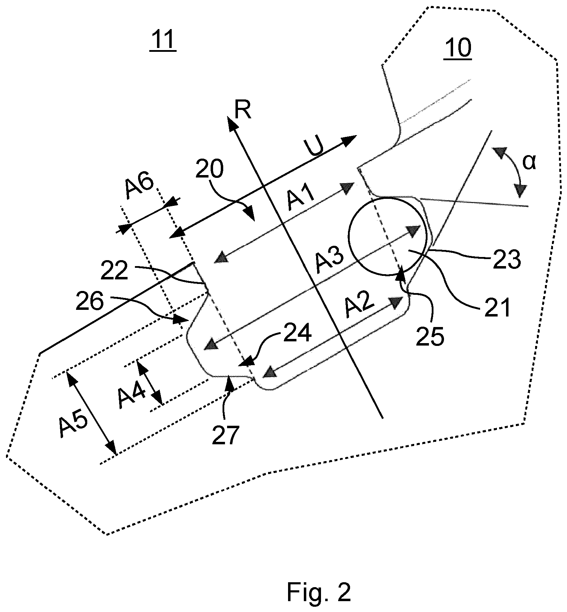

Beim Wickeln der Spulenwicklungen 12 kann der Wickeldraht zunächst mit seinem Drahtabschnitt 21 in die zweiten Wickelräume 20 geführt und in einer Aufnahmetasche (beispielsweise Aufnahmetasche 25, wie in Figur 2 gezeigt) gegen eine Verschiebung entlang der Radialrichtung R fixiert werden.

Anschließend kann der Wickeldraht in den zu dem zweiten Wickelraum 20 gehörenden ersten Wickelraum 11 geführt und um den angrenzenden Zahn 11 gewickelt werden.

Aufgrund der Fixierung in dem zweiten Wickelraum 20 kann der Wickeldraht in dem ersten Wickelraum 11 nicht verrutschen und eng sowie auf Zug belastet geführt bzw. um den Zahn 10 gewickelt werden.

Dadurch wird nicht nur ein prozesssicheres Wickeln ermöglicht, sondern auch ein enges Wickeln, was zu einem hohen Füllfaktor des Wickeldrahts in dem ersten Wickelraum 11 führt.

**In** Figur 2 ist ein vergrößerter Ausschnitt eines Rotors oder Stators 1 mit einem zweiten Wickelraum 20 dargestellt, wobei es sich um einen Ausschnitt des Stators 1 gemäß Figur 1 handeln kann.

Dabei sind in Figur 2 insbesondere die einander in Umfangsrichtung U gegenüberliegenden Aufnahmetaschen 24, 25 sichtbar, in welchen jeweils zumindest ein Drahtabschnitt 21 und vorliegend genau ein Drahtabschnitt 21 des Wickeldrahts angeordnet und durch die Anordnung gegen eine Verschiebung entlang der Radialrichtung R gesichert werden kann.

Dabei werden die Aufnahmetaschen 24, 25 vorzugsweise dadurch gebildet, dass der Abstand A3 der Seitenwände 22, 23 des zweiten Wickelraums 20 in dem Mittelabschnitt größer ist, als der Abstand A2 an einer zweiten, hier radialinneren Seite und als der Abstand A1 an einer ersten, hier radialäußeren Seite.

Die vorzugsweise formschlüssige Fixierung kann insbesondere durch die aufeinander zulaufenden schrägen Ebenen 26, 27 jeder Aufnahmetasche 24, 25 erreicht werden, welche zugleich der Zentrierung und Fixierung des Drahtabschnitts 21 des Wickeldrahts in der jeweiligen Aufnahmetasche 24, 25 dienen.

Die schrägen Ebenen 26, 27 einer jeweiligen Aufnahmetasche 24, 25 weisen hierfür an ihrem an den Mittelabschnitt angrenzenden Ende einen Abstand A4 und ihrem jeweils gegenüberliegenden Ende einen Abstand A5 zueinander auf, wobei der Abstand A5 so gewählt ist, dass ein Drahtabschnitt 21 eines Wickeldrahts in die jeweilige Aufnahmetasche 24, 25 eindringen kann und in der jeweiligen Aufnahmetasche 24, 25 durch das Zulaufen von dem Abstand A5 zu dem Abstand A4 zwischen den schrägen Ebenen 26, 27 eingeklemmt wird.

Hierzu weisen die Aufnahmetaschen 24, 25 auch jeweils eine Tiefe A6 auf, welche vorzugsweise größer oder gleich einem Radius eines größten für den Stator 1 verwendbaren Wickeldrahts ist.

Durch die Tiefe A6 und die Abstände A4 und A5 ergibt sich zudem, dass die schrägen Ebenen 26, 27 in einem Öffnungswinkel α aufeinander zulaufen und dieser so gewählt ist, dass der Drahtabschnitt 21 formschlüssig in der jeweiligen Aufnahmetasche 24, 25 fixierbar ist.

Die vorliegende Erfindung ist nicht auf die beschriebenen Ausführungsformen beschränkt. Änderungen und/oder Modifikationen der beschriebenen Ausführungsformen sind als alternative Formen der Erfindung denkbar, sofern sie nicht vom Umfang der Erfindung abweichen, der durch die beigefügten Ansprüche definiert ist.

## Patentansprüche

1. Elektromotor mit einem Rotor und einem Stator (1), wobei der Rotor und/oder der Stator (1) eine Vielzahl von Zähnen (10) aufweist, wobei zwischen jeweils zwei unmittelbar zueinander benachbarten Zähnen (10) ein erster Wickelraum (11) zur Aufnahme einer Vielzahl von aus einem Wickeldraht gewickelten Spulenwicklungen (12) ausgebildet ist, wobei angrenzend an zumindest einen ersten Wickelraum (11) ein mit dem jeweiligen ersten Wickelraum (11) verbundener zweiter Wickelraum (20) zur Aufnahme zumindest eines Drahtabschnitts (21) des Wickeldrahts ausgebildet ist,
**dadurch gekennzeichnet, dass** der zweite Wickelraum (20) in eine Umfangsrichtung (U) um eine Rotationsachse (X) des Rotors zwei einander gegenüberliegende Seitenwände (22, 23) aufweist, welche an einer in Radialrichtung (R) zu dem ersten Wickelraum (11) weisenden ersten Seite des zweiten Wickelraums (20) mit einem ersten Abstand (A1), an einer in Radialrichtung (R) von dem ersten Wickelraum (11) abgewandten zweiten Seite des zweiten Wickelraums (20) mit einem zweiten Abstand (A2) und in einem Mittelabschnitt zwischen der ersten Seite und der zweiten Seite einem dritten Abstand (A3) in Umfangsrichtung (U) zueinander beabstandet sind, wobei der zweite Abstand (A2) gleich oder größer dem ersten Abstand (A1) und der dritte Abstand (A3) größer dem zweiten Abstand (A2) ist, sodass im Mittelabschnitt der Seitenwände (22, 23) zwei in Umfangsrichtung (U) einander gegenüberliegende Aufnahmetaschen (24, 25) zur jeweiligen Aufnahme des zumindest einen Drahtabschnitts (21) des Wickeldrahts gebildet sind.

2. Elektromotor nach Anspruch 1, wobei die Seitenwände (22, 23) an der ersten Seite jeweils einen ersten Abschnitt aufweisen und von dem jeweiligen ersten Abschnitt jeweils über eine zu der zweiten Seite verlaufende und zu der Radialrichtung (R) schrägen Ebene (26) in den jeweiligen Mittelabschnitt übergehen.

3. Elektromotor nach Anspruch 1 oder 2,
wobei die Seitenwände (22, 23) an der zweiten Seite jeweils einen zweiten Abschnitt aufweisen und von dem jeweiligen zweiten Abschnitt jeweils über eine zu der ersten Seite verlaufende und zu der Radialrichtung (R) schrägen Ebene (27) in den jeweiligen Mittelabschnitt übergehen.

4. Elektromotor nach Anspruch 2 und 3,
wobei die zu der zweiten Seite verlaufende schräge Ebene (26) und die zu der ersten Seite verlaufende schräge Ebene (27) einer Seitenwand (22, 23) gemeinsam eine Zentrierung zur Zentrierung des jeweiligen zumindest einen Drahtabschnitts (21) des Wickeldrahts in der Aufnahmetasche (24, 25) bilden.

5. Elektromotor nach dem vorhergehenden Anspruch,
wobei die zu der zweiten Seite verlaufende schräge Ebene (26) und die zu der ersten Seite verlaufende schräge Ebene (27) einer Seitenwand (22, 23) an einem ersten Endabschnitt, an welchem die schrägen Ebenen in den Mittelabschnitt übergehen, einen vierten Abstand (A4) zueinander aufweisen, wobei der vierte Abstand (A4) kleiner oder gleich einem Durchmesser eines kleinsten verwendbaren Wickeldrahts ist.

6. Elektromotor nach einem der Ansprüche 4 oder 5,
wobei die zu der zweiten Seite verlaufende schräge Ebene (26) und die zu der ersten Seite verlaufende schräge Ebene (27) einer Seitenwand (22, 23) an einem jeweils dem ersten Endabschnitt gegenüberliegendem zweiten Endabschnitt einen fünften Abstand (A5) zueinander aufweisen, wobei der fünfte Abstand (A5) größer oder gleich einem Durchmesser eines größten verwendbaren Wickeldrahts ist, insbesondere genau gleich einem Durchmesser des größten verwendbaren Wickeldrahts.

7. Elektromotor nach einem der Ansprüche 4 bis 6,
wobei die zu der zweiten Seite verlaufende schräge Ebene (26) und die zu der ersten Seite verlaufende schräge Ebene (27) einer jeweiligen Seitenwand (22, 23) in einem vorbestimmten Öffnungswinkel (α) zueinander angeordnet sind, durch welchen mit dem Wickeldraht ein Formschluss erzeugbar und der Wickeldraht zwischen den schrägen Ebenen (26, 27) fixierbar ist.

8. Elektromotor nach einem der vorhergehenden Ansprüche,
wobei die Aufnahmetaschen (24, 25) jeweils ausgebildet sind, zumindest einen Drahtabschnitt (21) des Wickeldrahts insbesondere durch Formschluss gegen eine Verschiebung entlang der Radialrichtung (R) zu fixieren.

9. Elektromotor nach einem der vorhergehenden Ansprüche,
wobei die Aufnahmetaschen (24, 25) asymmetrisch zueinander ausgebildet sind.

10. Elektromotor nach einem der vorhergehenden Ansprüche,
wobei eine durch den zweiten Wickelraum (20) verlaufende Mittelachse versetzt zu einer durch den ersten Wickelraum (11) verlaufenden Mittelachse ist, sodass der zweite Wickelraum (20) asymmetrisch zu dem ersten Wickelraum (11) angeordnet ist.

## Claims

1. An electric motor with a rotor and a stator (1), wherein the rotor and/or the stator (1) has a multiplicity of teeth (10), wherein a first winding space (11) for receiving a multiplicity of coil windings (12) wound from a winding wire is formed between two respective immediately adjacent teeth (10), and wherein a second winding space (20) that is connected to the respective first winding space (11) in order to receive at least one wire portion (21) of the winding wire is formed adjacent to at least one first winding space (11), **characterized in that** the second winding space (20) has two mutually opposing side walls (22, 23) in a circumferential direction (U) about an axis of rotation (X) of the rotor which are spaced apart from one another by a first distance (A1) on a first side of the second winding space (20) facing in the radial direction (R) toward the first winding space (11), by a second distance (A2) on a second side of the second winding space (20) facing away from the first winding space (11) in the radial direction (R), and by a third distance (A3) in a center portion between the first side and the second side in the circumferential direction (U), wherein the second distance (A2) is equal to or greater than the first distance (A1), and the third distance (A3) is greater than the second distance (A2), so that two receiving pockets (24, 25) situated opposite one another in the circumferential direction (U) are formed in the center portion of the side walls (22, 23) in order to respectively receive the at least one wire portion (21) of the winding wire.

2. The electric motor as set forth in claim 1, wherein the side walls (22, 23) each have a first portion on the first side and transition from the respective first portion into the respective center portion via a plane (26) that extends to the second side and is oblique to the radial direction (R).

3. The electric motor as set forth in claim 1 or 2, wherein the side walls (22, 23) on the second side each have a second portion and transition from the respective second portion into the respective center portion via a plane (27) that extends to the first side and is oblique to the radial direction (R).

4. The electric motor as set forth in claims 2 and 3, wherein the oblique plane (26) extending to the second side and the oblique plane (27) of a side wall (22, 23) extending to the first side together have a centering for centering the respective at least one wire portion (21) of the winding wire in the receiving pocket (24, 25).

5. The electric motor as set forth in the preceding claim, wherein the oblique plane (26) extending to the second side and the oblique plane (27) of a side wall (22, 23) extending to the first side are at a fourth distance (A4) from one another at a first end portion at which the oblique planes merge into the center portion, the fourth distance (A4) being smaller than or equal to a diameter of the smallest usable winding wire.

6. The electric motor as set forth in any one of claims 4 or 5, wherein the oblique plane (26) extending to the second side and the oblique plane (27) of a side wall (22, 23) extending to the first side are at a fifth distance (A5) from one another at a second end portion opposite the first end portion, the fifth distance (A5) being greater than or equal to a diameter of the largest usable winding wire, particularly exactly equal to a diameter of the largest usable winding wire.

7. The electric motor as set forth in any one of claims 4 to 6, wherein the oblique plane (26) extending to the second side and the oblique plane (27) of a respective side wall (22, 23) extending to the first side are arranged at a predetermined opening angle (α) relative to one another, which enables a positive fit to be established with the winding wire and the winding wire to be fixed between the oblique planes (26, 27).

8. The electric motor as set forth in any one of the preceding claims, wherein the receiving pockets (24, 25) are each designed to secure at least one wire portion (21) of the winding wire against displacement along the radial direction (R), particularly by positive locking.

9. The electric motor as set forth in any one of the preceding claims, wherein the receiving pockets (24, 25) are designed so as to be asymmetrical relative to one another.

10. The electric motor as set forth in any one of the preceding claims, wherein a center axis extending through the second winding space (20) is offset from a center axis extending through the first winding space (11), so that the second winding space (20) is arranged asymmetrically with respect to the first winding space (11).

## Revendications

1. Moteur électrique comprenant un rotor et un stator (1), le rotor et/ou le stator (1) présentant une pluralité de dents (10), un premier espace de bobinage (11) étant formé entre respectivement deux dents (10) immédiatement adjacentes l'une à l'autre pour la réception d'une pluralité d'enroulements de bobine (12) bobinés à partir d'un fil de bobinage, un deuxième espace de bobinage (20), relié au premier espace de bobinage (11) respectif, étant formé de manière adjacente à au moins un premier espace de bobinage (11) pour la réception d'au moins un tronçon de fil (21) du fil de bobinage,
**caractérisé en ce que** le deuxième espace de bobinage (20) présente, dans une direction circonférentielle (U) autour d'un axe de rotation (X) du rotor, deux parois latérales (22, 23) opposées l'une à l'autre, lesquelles sont espacées l'une de l'autre dans la direction circonférentielle (U) selon une première distance (A1) au niveau d'un premier côté du deuxième espace de bobinage (20) tourné vers le premier espace de bobinage (11) dans la direction radiale (R), selon une deuxième distance (A2) au niveau d'un deuxième côté du deuxième espace de bobinage (20) opposé au premier espace de bobinage (11) dans la direction radiale (R), et selon une troisième distance (A3) dans une section médiane entre le premier côté et le deuxième côté, la deuxième distance (A2) étant égale ou supérieure à la première distance (A1) et la troisième distance (A3) étant supérieure à la deuxième distance (A2), de sorte que deux poches de réception (24, 25) opposées l'une à l'autre dans la direction circonférentielle (U) sont formées dans la section médiane des parois latérales (22, 23) pour la réception respective de l'au moins un tronçon de fil (21) du fil de bobinage.

2. Moteur électrique selon la revendication 1, dans lequel les parois latérales (22, 23) présentent respectivement un premier tronçon au niveau du premier côté et passent de chaque premier tronçon respectif à la section médiane respective par l'intermédiaire d'un plan incliné (26) s'étendant vers le deuxième côté et étant oblique par rapport à la direction radiale (R).

3. Moteur électrique selon la revendication 1 ou 2,
dans lequel les parois latérales (22, 23) présentent respectivement un deuxième tronçon au niveau du deuxième côté et passent de chaque deuxième tronçon respectif à la section médiane respective par l'intermédiaire d'un plan incliné (27) s'étendant vers le premier côté et étant oblique par rapport à la direction radiale (R).

4. Moteur électrique selon la revendication 2 ou 3,
dans lequel le plan incliné (26) s'étendant vers le deuxième côté et le plan incliné (27) s'étendant vers le premier côté d'une paroi latérale (22, 23) forment ensemble un centrage pour le centrage de l'au moins un tronçon de fil (21) respectif du fil de bobinage dans la poche de réception (24, 25).

5. Moteur électrique selon la revendication précédente,
dans lequel le plan incliné (26) s'étendant vers le deuxième côté et le plan incliné (27) s'étendant vers le premier côté d'une paroi latérale (22, 23) présentent, au niveau d'un premier tronçon d'extrémité où les plans inclinés passent dans la section médiane, une quatrième distance (A4) l'un par rapport à l'autre, la quatrième distance (A4) étant inférieure ou égale à un diamètre d'un plus petit fil de bobinage susceptible d'être utilisé.

6. Moteur électrique selon l'une des revendications 4 ou 5,
dans lequel le plan incliné (26) s'étendant vers le deuxième côté et le plan incliné (27) s'étendant vers le premier côté d'une paroi latérale (22, 23) présentent, au niveau d'un deuxième tronçon d'extrémité opposé respectivement au premier tronçon d'extrémité, une cinquième distance (A5) l'un par rapport à l'autre, la cinquième distance (A5) étant supérieure ou égale à un diamètre d'un plus grand fil de bobinage susceptible d'être utilisé, en particulier exactement égale à un diamètre du plus grand fil de bobinage susceptible d'être utilisé.

7. Moteur électrique selon l'une des revendications 4 à 6,
dans lequel le plan incliné (26) s'étendant vers le deuxième côté et le plan incliné (27) s'étendant vers le premier côté d'une paroi latérale (22, 23) respective sont disposés selon un angle d'ouverture prédéterminé (α) l'un par rapport à l'autre, par lequel une liaison par complémentarité de forme peut être produite avec le fil de bobinage et le fil de bobinage peut être fixé entre les plans inclinés (26, 27).

8. Moteur électrique selon l'une des revendications précédentes,
dans lequel les poches de réception (24, 25) sont respectivement conçues pour immobiliser au moins un tronçon de fil (21) du fil de bobinage, en particulier par liaison par complémentarité de forme, contre un déplacement le long de la direction radiale (R).

9. Moteur électrique selon l'une des revendications précédentes,
dans lequel les poches de réception (24, 25) sont conçues de manière asymétrique l'une par rapport à l'autre.

10. Moteur électrique selon l'une des revendications précédentes,
dans lequel un axe médian s'étendant à travers le deuxième espace de bobinage (20) est décalé par rapport à un axe médian s'étendant à travers le premier espace de bobinage (11), de sorte que le deuxième espace de bobinage (20) est disposé de manière asymétrique par rapport au premier espace de bobinage (11).
